# EUROPEAN PATENT APPLICATION

(11) **EP 3 467 941 A1**
(43) Date of publication of application: **10.04.2019**
(21) Application number: 16741046.3
(22) Date of filing: 30.05.2016
(51) Int. Cl.: H01R 4/00, H02S 20/00

(54) **GALVANIC ISOLATION AND ELECTRICAL CONNECTION ELEMENT FOR PHOTOVOLTAIC INSTALLATIONS AND PHOTOVOLTAIC INSTALLATION COMPRISING SAID ELEMENT**

(71) Applicant: AAAG Seros Training, S.L., 08042 Barcelona (ES)
(72) Inventor: ROS SERRANO, Gabriel, 08042 Barcelona (ES)
(74) Representative: Herrero & Asociados, S.L.
(86) International application number: PCT/ES2016/070405
(87) International publication number: WO 2017/207826

(57) **Abstract**

The galvanic isolation and electrical connection piece (1) for photovoltaic facilities can be arranged between two metal parts (2, 3) of a photovoltaic facility and is characterised in that it is formed from a main body (10) made of electrically non-conducting material, which comprises at least one electrical connector (11) that passes through said main body (10).

It enables the separation of the metal parts of a photovoltaic facility to prevent corrosion thereof and, at the same time, said electric connector enables the electrical connection of said metal parts so as to comply with the safety regulations currently in force.

## Description

### DESCRIPTION

The present invention relates to a galvanic isolation and electrical connection piece for photovoltaic facilities, which allows galvanic isolation and electrical continuity between different metals present in a photovoltaic facility.

### Background of the invention

Currently known photovoltaic facilities comprise a support structure in the form of a metal profile, whereon photovoltaic modules, also metallic, are fixed.

A common problem of these currently known photovoltaic facilities is that the contact between the different metal components causes corrosion in their joints, with the ensuing degradation thereof, shortening the useful life of the photovoltaic facilities. This shortening of the useful life of these facilities has a significant effect on the cost thereof, as well as the efficiency of the plant in relation to its calculated life, since it can be shortened and, as a result, reduce the amount of energy produced during the aforementioned useful life.

Furthermore, the recently modified regulation for photovoltaic facilities, particularly standards IEC 61215 and IEC 61730, requires that all the metal parts of the photovoltaic facility be electrically connected for electrical safety reasons. Therefore, this mandatory electrical connection between the metal parts makes it difficult to prevent the aforementioned corrosion problems.

Therefore, the need for a galvanic isolation piece that makes it possible to solve the aforementioned corrosion problems and, simultaneously, enables the electrical between the metal parts is evident.

Additionally, another objective of the present invention is to provide a galvanic isolation piece that can easily be assembled in the pre-existing photovoltaic facilities, such that they can adapt to current regulations and comply therewith in a very simple and economic manner.

### Description of the invention

The galvanic isolation piece of the invention resolves the aforementioned drawbacks and has other advantages described below.

The galvanic isolation piece for photovoltaic facilities according to the present invention can be arranged between two metal parts of a photovoltaic facility and is characterised in that it is formed from a main body made of an electrically non-conducting material, which comprises at least one electric connector that passes through said main body.

This characteristic enables the separation of the metal parts of a photovoltaic facility to avoid its corrosion and, at the same time, said electrical connector enables the electrical connection of said metal parts so as to comply with the safety regulations currently in force.

Advantageously, said electrically non-conducting material is a polymer, with the possibility of choosing between any appropriate conventional polymer for this purpose.

In accordance with a preferred embodiment, said main body is U-shaped, although it could take on other shapes, in a plan view, allowing the passage of a fixing element through the arms of said U.

Preferably, said at least one electrical connector is housed inside a through hole of said main body and, for example, said electrical connector may be a metal pin.

If desired, said galvanic isolation piece may also comprise a coupling element, for example, a nut.

In accordance with a possible embodiment, the galvanic isolation piece may comprise an additional body joined to said main body, constituting a single body defining a slot therebetween, wherein a metal part of a photovoltaic facility can be housed. In this case, said coupling element is advantageously disposed in said additional body.

The present invention also relates to a photovoltaic facility that comprises a galvanic isolation piece as previously defined, installed between a support structure and a frame of a photovoltaic module.

For example, said support structure and said frame of a photovoltaic module are fixed to each other by means of at least one fixing screw with the interposition of said galvanic isolation piece.

### Brief description of the drawings

In order to help make the foregoing more readily understandable, the description is accompanied by a set of drawings which, schematically and only by way of illustration and not limitation, represent a practical case of embodiment.
Figure 1 shows a plan view of a galvanic isolation piece in accordance with a first embodiment of the present invention;
Figure 2 shows a sectional view of the galvanic isolation piece in accordance with said first embodiment of the present invention assembled in a photovoltaic facility, specifically between the support structure and the frame of a photovoltaic module;
Figure 3 shows a plan view of a galvanic isolation piece in accordance with a second embodiment of the present invention; and
Figure 4 shows a sectional view of the galvanic isolation piece in accordance with said second embodiment of the present invention mounted in a photovoltaic facility, specifically between the support structure and the frame of a photovoltaic module.

### Description of a preferred embodiment

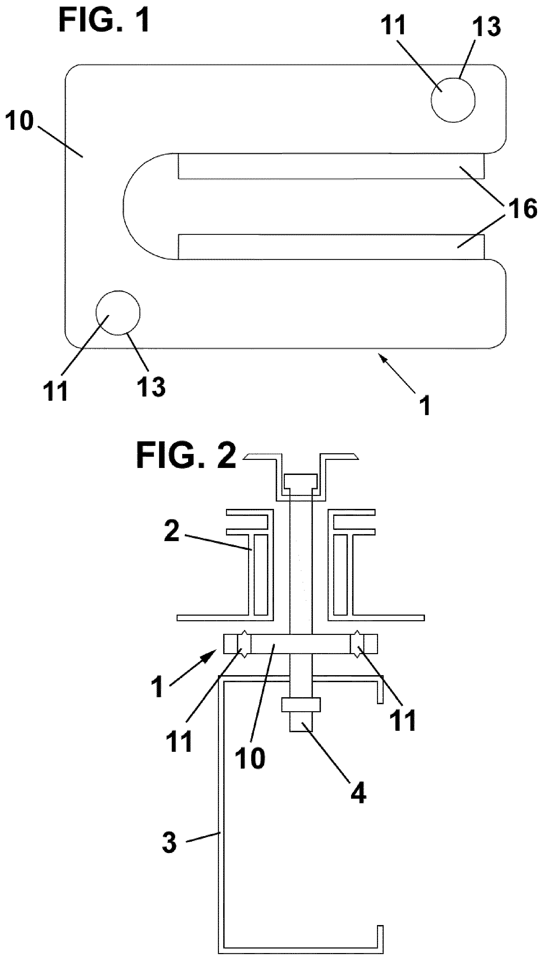

Figures 1 and 2 show a first embodiment of the galvanic isolation piece, indicated in general by reference number 1, in accordance with a first embodiment of the present invention.

This galvanic isolation piece 1 is formed by a main body 10 of an electrically non-conducting material, for example, polymer material, which enables the effective separation of two metal parts of a photovoltaic facility, avoiding corrosion between the two parts due to the direct metal contact therebetween. Said metal parts are preferably a support structure 3 and a frame 2 for a photovoltaic module.

In order to fulfil the requirements of the current regulations governing photovoltaic facilities, said galvanic isolation piece 1 comprises at least one electrical connector 11 that passes through said main body 10. In particular, said electrical connector 11 may be a metal pin housed in a through hole 13 of said main body 10.

The function of the electrical connector 11 is to electrically connect the two metal parts 2, 3 for electrical safety reasons, as required by current regulations.

It should be noted that the number of electrical connectors 11 may be any appropriate number. For example, in the embodiment represented, the galvanic isolation piece 1 comprises two electrical connectors 11.

As can be observed in figure 1, the main body 10 has a U-shaped plan view. In this manner, a fixing screw 4 is arranged between the arms of the U in order to fix said metal parts 2, 3 to each other, as can be observed in figure 2. In order to facilitate the arrangement of the fixing screw 4, the arms of the U comprise tongues 16 on the inner part thereof, as can be observed in figure 1.

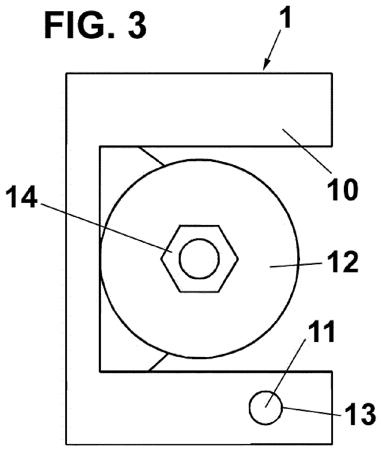

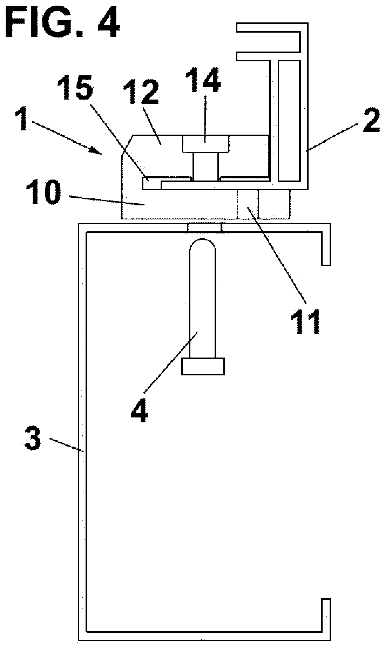

Figures 3 and 4 show a second embodiment of the galvanic isolation piece 1 in accordance with the present invention. For the sake of clarity and simplicity, in this second embodiment the same reference numbers are used to identify elements equivalent to the first embodiment. In addition, only the differences with respect to said first embodiment shall be explained.

In this second embodiment, the galvanic isolation piece 1 comprises an additional body 12 joined to said main body 10, defining a slot 15 wherein a metal part 2 of the photovoltaic facility can be housed.

Additionally, in this embodiment, the galvanic isolation piece 1 comprises a coupling element 14, for example a nut, that is preferably inserted in said additional body 12, as can be observed in figures 3 and 4. In addition, in this case, the fixation between the metal parts 2, 3 is carried out by means of a fixing screw 4.

The geometry of the piece 1 in accordance with the present invention enables it to be used both in newly built facilities and in existing facilities, to which electrical continuity must be provided in order to adapt to current regulations, which are much more stringent than the previous regulations.

For its use in existing plants, it is only necessary to loosen the fixing screw 14, insert the piece 1 laterally and re-tighten the screw 14. This will enable the electrical union of modules 2 and structure 3, without need to disassemble the facility, with the ensuing loss of production thereof.

Therefore, it is a useful and feasible solution, both for the plant owner and for the financial institution that contributes the economic means for its construction, since it ensures more reliable long-term returns, due to not having to carry out subsequent repairs to transfer the plant to third parties, which is very common.

Despite the fact that reference has been made to a specific embodiment of the invention, it is evident for the person skilled in the art that the described galvanic isolation piece is susceptible of many variations and modifications, and that all the aforementioned details may be substituted for other, technically equivalent ones without detracting from the scope of protection defined by the attached claims.

## Claims

1. A galvanic isolation and electrical connection piece (1) for photovoltaic facilities, which can be arranged between two metal parts (2, 3) of a photovoltaic facility, **characterised in that** it is formed from a main body (10) made of electrically non-conducting material that comprises at least one electrical connector (11) that passes through said main body (10).

2. The galvanic isolation piece (1) for photovoltaic facilities, according to claim 1, wherein said electrically non-conducting material is a polymer.

3. The galvanic isolation piece (1) for photovoltaic facilities, according to claim 1, wherein said main body (10) is U-shaped.

4. The galvanic isolation piece (1) for photovoltaic facilities, according to claim 1, wherein said at least one electrical connector (11) is housed in a through hole (13) of said main body (10).

5. The galvanic isolation piece (1) for photovoltaic facilities, according to claim 1, wherein said electrical connector (11) is a metal pin.

6. The galvanic isolation piece (1) for photovoltaic facilities, according to claim 1, which also comprises a coupling element (14).

7. The galvanic isolation piece (1) for photovoltaic facilities, according to claim 6, wherein said coupling element (14) is a nut.

8. The galvanic isolation piece for photovoltaic facilities, according to claim 1, that comprises an additional body (12) joined to said main body (10), defining a slot (15) therebetween wherein a metal part (2) of a photovoltaic facility can be housed.

9. The galvanic isolation piece for photovoltaic facilities, according to claims 6 and 8, wherein said coupling element (14) is arranged in said additional body (12).

10. A photovoltaic facility, **characterised in that** it comprises a galvanic isolation and electrical connection piece, according to any one of the preceding claims, mounted between a support structure (3) and a frame (2) of a photovoltaic module.

11. The photovoltaic facility, according to claim 10, wherein said support structure (3) and said frame (2) of a photovoltaic module are fixed together by means of at least one fixing screw (4) with the interposition of said galvanic isolation piece (1).
